# EUROPEAN PATENT APPLICATION

(11) **EP 4 844 594 A1**
(43) Date of publication of application: **25.11.2026**
(21) Application number: 25177751.2
(22) Date of filing: 20.05.2025
(51) Int. Cl.: G06F 12/0831, G06F 12/084, G06F 12/0842, G06F 12/14

(54) **CACHELINE OBSERVER**

(71) Applicant: Huawei Cloud Computing Technologies Co., Ltd., Gui'an New District, Guizhou 550025 (CN)
(72) Inventor: HUMBEL, Lukas, 80992 Munich (DE)
(74) Representative: Roth, Sebastian

(57) **Abstract**

A computer system comprising hypervisor and plurality of clients on memory bus, each client having local cache and wherein plurality of clients shares shared cache, wherein computer system is characterized in that computer system further comprises one or more cacheline observers, CLO, CLO being a programmable hardware unit, each connected to client, and wherein CLO is configured to check memory access made by client and produce "accept" or "reject" of memory access, when the CLO produces a "reject", the CLO is further configured to prevent the memory access and notify the hypervisor.

## Description

### TECHNICAL FIELD

The present disclosure relates generally to the field of computing systems, and more specifically, to a computer system configured to control memory accesses by utilizing one or more Cacheline Observers (CLOs).

### BACKGROUND

Modern computer systems require multiple untrusted actors to cooperate and share resources, particularly in cloud data centres and in multi-core computer systems. Moreover, the untrusted actors require access to shared memory regions while maintaining security and data integrity, even when the untrusted actors do not act as expected. Currently, in the computer systems, the untrusted actors that require to cooperate rely on message passing through narrowly defined interfaces, such as TCP sockets, remote procedure calls (RPCs) and the like. While message passing provides security by allowing data verification, however the message passing leads to significant overhead due to data serialization and the requirement for receiver actions. Certain attempts have been made to enable efficient cooperation between the untrusted actors, such as shared memory systems that provide efficient interaction by allowing the untrusted actors to directly manipulate common data structures without the overhead of message passing. However, the shared memory access requires all participating actors to trust each other completely. Without trust, the untrusted actors cannot safely assume that data structure invariants are maintained and that requires extensive verification that impacts the computer system performance.

Certain attempts have been made in the computer systems to enable the untrusted actors to cooperate through the shared memory. Existing techniques, such as compartmentalization in both hardware, such as CHERI, ARM Morello, Intel SGX, Intel MPK and the like and software, such as Web Assembly, JVM and the like which form isolated compartments with restricted privileges for the untrusted actors. However, the existing techniques lead to performance overhead due to compartment switching and often require data copying. Thus, there exists a technical problem of how to enable enhanced cooperation between the untrusted actors in shared memory systems.

Therefore, in light of the foregoing discussion, there exists a need to overcome the aforementioned drawbacks associated with the existing computer systems.

### SUMMARY

The present disclosure provides a computer system that includes a cacheline observer (CLO) to operate between a client private cache and a shared cache to provide memory isolation in multi-client shared memory environments. Furthermore, the present disclosure provides the computer system that maintains data integrity and data security without requiring extensive program retraining or significant performance overhead. The present disclosure provides a solution to the existing problem of how to enable enhanced cooperation between the untrusted actors in shared memory systems.

An objective of the present disclosure is to provide a solution that overcomes at least partially the problems encountered in the prior art and provides the computer system that enhances cooperation between the untrusted actors in shared memory systems.

One or more objectives of the present disclosure are achieved by the solutions provided in the enclosed independent claims. Advantageous implementations of the present disclosure are further defined in the dependent claims.

In one aspect, the present disclosure provides a computer system that includes a hypervisor and a plurality of clients on a memory bus, each client having a local cache in which the plurality of clients shares a shared cache. Furthermore, the computer system is characterized in that the computer system further includes one or more cacheline observers (CLO), the CLO being a programmable hardware unit, each connected to a client in which the CLO is configured to check memory access made by the client and produce an "accept" or "reject" of the memory access. Additionally, when the CLO produces a "reject", the CLO is further configured to prevent the memory access and notify the hypervisor.

Advantageously, the computer system is configured to enhance the security, isolation, and efficiency of memory access control by utilizing the Cacheline Observer (CLO). By intercepting cacheline loads and evictions directly at the memory access path, the CLO is configured to enforce fine-grained memory access policies independently thereby ensuring that unauthorized or malformed memory operations are detected and prevented at the point of the memory access. Moreover, the CLO evaluates memory access events by utilizing programmable logic and metadata-driven processing, allowing context-specific policies to be dynamically applied based on the hypervisor configuration, even in complex multi-tenant environments with frequent context switches. The utilization of internal state memory, updated for each memory event, enables the CLO to track access histories and enforce invariants over time, maintaining the integrity and correctness of the shared memory structures. Additionally, by providing peek access to private caches ,the CLO can check a larger set of properties, significantly enhancing its verification capabilities, which is combined with transparent operation across heterogeneous clients, allows the computer system to adapt to dynamic workloads and security requirements while minimizing overall system overhead.

It is to be appreciated that all the aforementioned implementation forms can be combined.

It has to be noted that all devices, elements, circuitry, units, and means described in the present application could be implemented in the software or hardware elements or any kind of combination thereof. All steps which are performed by the various entities described in the present application, as well as the functionalities described to be performed by the various entities, are intended to mean that the respective entity is adapted to or configured to perform the respective steps and functionalities. Even if, in the following description of specific embodiments, a specific functionality or step to be performed by external entities is not reflected in the description of a specific detailed element of that entity that performs that specific step or functionality, it should be clear for a skilled person that these methods and functionalities can be implemented in respective software or hardware elements or any kind of combination thereof. It will be appreciated that features of the present disclosure are susceptible to being combined in various combinations without departing from the scope of the present disclosure as defined by the appended claims.

Additional aspects, advantages, features, and objects of the present disclosure would be made apparent from the drawings and the detailed description of the illustrative implementations construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1 is a block diagram that depicts a computer system with one or more cacheline observer that is configured to control memory accesses, in accordance with an embodiment of the present disclosure;
FIG. 2 is a diagram that depicts a one or more CLOs in the computer system, in accordance with an embodiment of the present disclosure;
FIG. 3 is a diagram that depicts an internal structure of the one or more CLOs, in accordance with an embodiment of the present disclosure;
FIG. 4 is a diagram that depicts an interaction of a trusted entity and the CLO, in accordance with an embodiment of the present disclosure;
FIG. 5 is a diagram that depicts an exemplary scenario of the computer system with the CLO that is configured to control memory accesses, in accordance with an embodiment of the present disclosure;
FIG. 6 is a diagram that depicts an implementation scenario of the setting up an object cache memory utilizing the CLO, in accordance with an embodiment of the present disclosure;
FIG. 7 is a diagram that depicts a memory layout of the object cache memory region, in accordance with an embodiment of the present disclosure;
FIG. 8 is a diagram that depicts an implementation scenario of accelerator pooling utilizing the CLOs for secure memory access management, in accordance with an embodiment of the present disclosure; and
FIG. 9 is a diagram that depicts an implementation scenario that illustrates rack-scale memory sharing by utilizing the CLO to control access to a shared memory pool across multiple servers, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

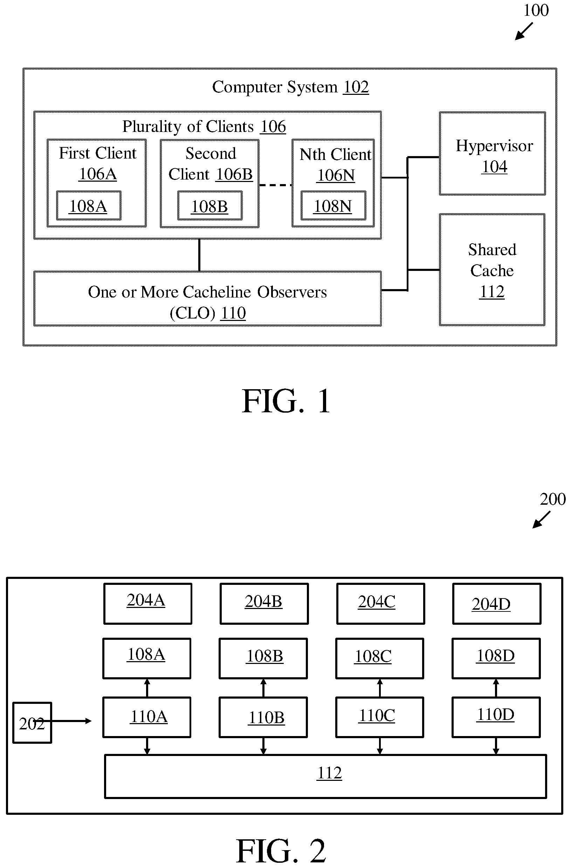

FIG. 1 is a block diagram that depicts a computer system with one or more cacheline observer that is configured to control memory accesses, in accordance with an embodiment of the present disclosure. With reference to FIG. 1, there is shown a diagram **100** that includes the computer system **102.** The computer system **102** further includes a hypervisor **104,** a plurality of clients **106** (i.e., a first client **106A,** a second client **106B** and a Nth client **106N**), the one or more CLO **110** and a shared cache 112.

The computer system **102** is configured to provide a computing infrastructure that provides secure and enhanced shared memory access. Moreover, the computer system **102** includes the plurality of clients **106,** the hypervisor **104,** the one or more CLO **110,** and the shared cache **112,** and all interconnected through a memory bus to simplify complex computational operations with enhanced security and performance.

The hypervisor **104** refers to the component of the computer system **102** that is configured to act as the trusted central management layer of the computer system **102.** Moreover, the hypervisor **104** oversees and schedules clients, further manages the computer system **102** resources and programs CLO, provides information on memory access operations, and ensures the computer system **102** security by saving and restoring the CLO states during context switches.

The plurality of clients **106** is configured to represent the computational components within the computer system **102,** with each client linked to a private L1 cache (i.e., a first private L1 cache **108A,** a second private L1 cache **108B** and an Nth private L1 cache **108N**) that temporarily storing frequently accessed data to minimize memory access latency and accelerate computational processes. Furthermore, the plurality of clients **106** includes various computational entities, such as CPUs, specialized devices, accelerators and the like, each with the private L1 cache configured to optimize data access and the computer system **102** performance.

One or more cacheline Observers (CLO) **110** are configured to provide a detailed hardware monitoring across the computer system **102.** While each CLO operates independently, the one or more CLO **110** is positioned to verify cacheline evictions and loads, make "accept" or "reject" decisions for memory accesses, prevent unauthorized memory interactions, notify the hypervisor **104** of potential violations, and maintain own programmable state memory.

The shared cache 112 refers to the common memory storage accessible by the plurality of clients **106** in the computer system **102.** The shared cache **112** implemented as the Last Level Cache (LLC), the shared cache **112** sits between the private L1 caches and main memory (DRAM), enabling cache coherency and facilitating efficient data sharing across different processing cores while supporting the computer system **102** overall memory access protocols.

There is provided the computer system **102** comprising the hypervisor **104** and the plurality of clients **106** (i.e., the first client **106A,** the second client **106B,** and the nth client **106N**) on the memory bus, that is required for enabling secure and efficient shared memory access among untrusted actors. In an example, in the computer system **102,** the hypervisor **104** operates as a trusted Entity (TE) for scheduling and managing the plurality of clients **106,** which are devices configured to make memory access requests over the memory bus. In other words, the hypervisor **104** is configured to coordinate the scheduling of clients with the corresponding CLO programming, performing these operations together during context switches to ensure consistent security policy enforcement. In another example, in the computer system **102,** the hypervisor **104** operates as the trusted Entity (TE) for scheduling and managing the plurality of clients **106,** which are processing arrangements configured to make memory access requests over the memory bus. Moreover, the plurality of clients **106** is interconnected through the memory bus, and each client possesses a local cache while collectively accessing the shared cache **112,** such as the (LLC). Furthermore, the configuration of the computer system **102** enables each client to perform direct load/store fabric interface memory interactions with the shared memory, eliminating the requirement for the hypervisor **104** intervention in every operation. While the plurality of clients **106** handles memory access independently, the hypervisor **104** remains managing the policy-enforcing CLO, which monitors and regulate the accesses at the hardware level. Additionally, by eliminating the overhead associated with compartment switches or message-passing, the configuration of the computer system **102** enables the integration of the one or more CLO **110** that are programmable hardware units that monitor and control memory accesses at the cache level and ensure hardware-based enforcement of memory access policies, maintaining data integrity with minimal performance overhead between the plurality of clients **106.**

Furthermore, in the computer system **102,** each client has the local cache (i.e., the private L1 cache) and the plurality of clients **106** shares the shared cache **112.** Each client is equipped with the own local cache to enable fast, low-latency access to frequently used data, minimizing reliance on the memory bus. In parallel, the plurality of clients **106** interface with the common shared cache **112,** the LLC, which enables coordinated data sharing and reduces cache misses in multi-client environments. The dual-cache configuration of the computer system **102** enables hierarchical caching where the local caches act as client-specific data, and the shared cache **112** supports inter-client communication and coherence. Furthermore, memory access paths are structured such that read and write operations first attempt to resolve in the local cache and, upon miss, escalate to the shared cache **112,** ensuring efficient resolution of memory access across levels. Additionally, coherence protocols or hardware configuration ensure consistency between the local cache and the shared cache **112.** The structural configuration allows the one or more CLO **110** to be positioned at the local cache interfaces, where the CLO capture memory events and enforces access control based on dynamically loaded policies. Thereby, by organizing the local cache and the shared cache **112** in a manner, the computer system **102** enhances data locality, reduces bus contention, and allows efficient, fine-grained memory management while maintaining data integrity with minimal performance degradation.

Furthermore, the computer system **102** is characterized in that the computer system **102** further comprises the one or more CLO **110** (CLO), the CLO being a programmable hardware unit, each connected to a client. In the structural configuration, each CLO is integrated between the client and the client-associated cache interface, enabling the CLO to observe and regulate memory access requests instantly. Moreover, the one or more CLO **110** are implemented as programmable hardware units, allowing the behaviour of each CLO to be dynamically defined or updated based on memory access control policies delivered by the hypervisor **104.** The programmability of the one or more CLO **110** provides flexible, context-aware enforcement that is optimized for the plurality of clients **106** or execution scenarios. Each CLO is directly connected to the corresponding client, placing the CLO in an optimal position to intercept memory operations before the CLO reaches the local cache or the shared cache **112.** Furthermore, the CLO enables in-line inspection of memory events, such as cacheline loads, stores, or evictions, without interrupting the execution pipeline. As a result, the computer system **102** provides a hardware-accelerated layer of memory access control, which operates independently of the main processor or software stack and ensures that untrusted clients are monitored and controlled at the hardware level, enhancing data security and access integrity with minimal latency.

Furthermore, the CLO is configured to check memory access made by the client and produce an "accept" or "reject" of the memory access, wherein when the CLO produces a "reject", the CLO is further configured to prevent the memory access and notify the hypervisor **104.** Operating in-line between the client and the client-associated cache interface, the CLO evaluates each memory event instantly by utilizing preloaded enforcement logic that interprets metadata, such as memory address, cache index, access state and the like. The evaluation is based on dynamically provisioned policies received from the hypervisor **104,** allowing the CLO to independently determine compliance at the hardware level. Moreover, upon a policy violation, the CLO inhibits the transmission of the memory request to the cache hierarchy and immediately signals the hypervisor **104** through an interrupt or control message. Moreover, the hardware-centric rejection ensures that unauthorized access attempts are intercepted before the unauthorized access impacts data integrity while maintaining the computer system **102** responsiveness. Thereby embedding the decision logic within the CLO hardware minimizing the hypervisor **104** intervention during normal execution.

In accordance with an embodiment, the CLO is further configured to notify the server by generating an interrupt. In an implementation, when the memory access is evaluated and determined to be non-compliant with the currently active access policies, the CLO not only blocks the operation at the hardware level but also generates an interrupt signal directed to the hypervisor **104.** Moreover, the interrupt-driven notification ensures that the hypervisor **104** is promptly made aware of any policy violations without requiring continuous polling and active monitoring. The integration of the interrupt pathway from each CLO to the hypervisor **104** allows for asynchronous, event-driven communication, enabling swift context-specific responses, such as auditing, logging, initiating corrective measures and the like. Thereby, delegating the alerting to the hardware-level CLO, the computer system **102** minimizes processing overhead while maintaining timely oversight over memory activity across the plurality of clients **106.**

In accordance with an embodiment, the CLO is further configured to update a state on each memory access. Each CLO maintains an internal state representation that reflects the sequence and outcome of the memory access events initiated by the CLO-connected client. Moreover, the state is continuously updated as part of the CLO present evaluation pipeline by utilizing metadata extracted from each access, such as the memory address, cache index, data value, modification flag, the previous state, and the like. The update of the state enables the CLO to enforce context-sensitive policies, where access decisions are influenced not just by static rules but by historical patterns or prior interactions. Furthermore, by capturing and evolving the execution context on a per-client basis, the CLO achieves granular, adaptive control over the memory access behaviour. Additionally, the dynamic state tracking enhances security by allowing the CLO to detect and respond to suspicious access patterns and ensures that the computer system **102** remains compliant with evolving access control requirements without degrading the overall performance of the computer system **102.**

In accordance with an embodiment, the memory access is a cacheline eviction or a cacheline load. In an implementation, within the operational flow of the CLO, the memory accesses represent observation points through which cache activity is monitored and analysed. During the cacheline load, the CLO inspects the metadata, such as the address, cache index, data content and the like, before permitting the data to be fetched from the cache hierarchy. Similarly, for the cacheline evictions, the CLO evaluates the validity and modification state of the data being removed. By targeting both loading and eviction events, the CLO ensures bi-directional oversight of data movement through the cache, providing a complete picture of memory usage patterns. As a result, the dual coverage enables enforcement of memory integrity policies and enhances the computer system **102** efficiency to detect unauthorized data transmission or leakage across the plurality of clients **106** boundaries.

In accordance with an embodiment, the CLO is a hardware unit that comprises a processing arrangement, a state memory and a program, wherein the program comprises computer-readable instructions that, when loaded into the processing arrangement, causes the CLO to perform the actions of the CLOs program. The actions include evaluating incoming memory access requests, such as cacheline loads, evictions and the like, by executing the access control logic defined in the loaded program. The processing arrangement interprets and runs the policy instructions at the point of the access, while the state memory maintains contextual data, such as access histories, cacheline tags, violation flags and the like to support decision-making. Upon intercepting a memory event from the plurality of client **106,** the CLO dynamically evaluates whether to accept or reject the request based on the programmed rules and current state. The embedded, self-contained configuration allows the CLO to operate independently of the main processor, thereby enabling timely enforcement of memory policies. The integration of processing, state, and program within the hardware ensures deterministic performance, reduced latency, and enhanced modularity, forming the CLO adaptable to varied execution contexts and scalable across the plurality of clients **106** configurations.

In accordance with an embodiment, the CLO is configured to receive the program from the hypervisor **104.** The program, which includes the memory access control policies encoded as computer-readable instructions, is transmitted by the hypervisor **104** during the computer system **102** initialization or dynamically during runtime based on changing execution contexts. Moreover, upon receipt, the CLO loads the program into the processing element inside the CLO, where the defines the rules for evaluating and handling memory access events. Furthermore, the CLO enables centralized control, allowing the hypervisor **104** to dictate or update client-specific memory policies without direct intervention in memory operations. The ability of the CLO to receive programs on demand enhances the computer system **102** flexibility, as memory enforcement behaviour adapted to evolving trust boundaries, workloads, and threat models. Technically, the separation of policy definition at the hypervisor **104** and enforcement within the CLO hardware enhances scalability, reduces the processing burden on the hypervisor **104,** and ensures low-latency, context-aware memory access control at the hardware level.

In accordance with an embodiment, when an execution context of the computing system switches, the CLO is configured to receive a new program. In an implementation, when a context switch occurs, such as during a process, thread, virtual machine change and the like, the hypervisor **104** transmits a new program to the CLO that corresponds to the requirements of the new execution context. Furthermore, the program, encoded as computer-readable instructions, defines the access control policies specific to the client or workload being activated. The CLO loads the program into the CLO internal processing arrangement, where the CLO governs the evaluation of memory access events for the active context. The evaluation enables context-specific enforcement, allowing each client or thread to operate under optimized memory access rules without relying on the hypervisor **104** mediation. The separation between policy definition handled by the hypervisor **104** and enforcement performed within the CLO allows the computer system **102** to adapt quickly to changing execution environments. By dynamically reprogramming the CLO during context switches, the computer system **102** achieves secure, fine-grained access control while maintaining high performance and minimizing overhead associated with task isolation. As a result, the configuration of the computer system **102** enhances flexibility in environments where clients are mutually untrusted, or workloads frequently shift.

In accordance with an embodiment, when the execution context of the computing system switches, the hypervisor **104** is configured to save and restore the CLO state. The CLO maintains an internal state, such as policy-specific metadata, access histories, tracking flags and the like, within the CLO local state memory. During the context switch, the hypervisor **104** persists the state by extracting and storing the CLO in a context-specific control structure, such as a thread, the virtual machine control block, and the like. When the context is resumed or reassigned, the hypervisor **104** restores the previously saved state back into the CLO, allowing the CLO to resume enforcement seamlessly based on prior interactions. The save and restore function ensures continuity in memory access enforcement across context switches and prevents stale or cross-context policy states from persisting. By isolating state per execution context, the computer system **102** enhances security and correctness, especially in multi-tenant environments where memory access patterns differ significantly between the plurality of clients **106.** Thereby, the hypervisor **104** handles state transitions transparently and provides flexibility in task scheduling while maintaining consistent policy enforcement in hardware without requiring reinitialization of the CLO for each switch.

In accordance with an embodiment, the CLOs being connected between the processing core and the local cache of its client. In the computer system **102,** each CLO is positioned in-line along the memory access path, directly intercepting communication between the processing core and the corresponding local cache. The placement enables the CLO to observe memory access events, such as cacheline loads and evictions, immediately as the memory access events are issued by the processing core before the data is stored in or retrieved from the local cache. By situating the CLO at the boundary, the CLO apply fine-grained enforcement policies to control which memory operations are permitted based on the program logic previously loaded by the hypervisor **104.** The proximity to the processing core ensures that even speculative or low-level cache operations are subject to CLO verification, enhancing both the accuracy and responsiveness of access control. The configuration of the computer system **102** allows the CLO to control peek functionality to inspect data residing in the processing core private cache without disrupting ongoing operations. By integrating the CLO at the core-cache interface, the computer system **102** achieves low-latency enforcement of the memory access policies with minimal hardware complexity, ensuring secure and efficient isolation of memory interactions in multi-client environments.

In accordance with an embodiment, the CLOs are connected between the local cache of its client and the shared cache **112.** In the configuration, the connection allows the CLO to intercept memory transactions particularly cacheline evictions from the local cache and loads into the local cache from the shared cache **112** before the data crosses the private-to-shared memory boundary. The CLO monitors the transitions at the point of the access by analysing associated metadata, such as address, cache index, modification status, and the like applies the CLO program logic to determine whether the access adheres to the security policy arranged by the hypervisor **104.** The CLO acts as the interface between the local cache and the shared cache **112** layers, and the CLO ensures that only policy-compliant data transfers are allowed, thereby enforcing isolation between the plurality of clients **106** and preserving memory integrity. The configuration of the computer system **102** is required in scenarios where multiple untrusted clients access the shared cache **112** regions, as the CLO prevents the transmission of unauthorized or malformed data across trust domains. Thereby, the configuration of the computer system **102** enables fine-grained, low-latency validation of the cross-cache interactions, reducing reliance on software-based isolation while supporting scalable deployment in multi-client systems.

In accordance with an embodiment, an ONLOAD event for the memory access have meta data of the memory access, which are: ONLOAD : (Addr, CI, CD,S) -> S', bool, wherein Addr: indicates an address of data to be loaded, CI: indicates a Cache Index, being a cache-specific identifier that identifies the location in the cache, CD: indicates the data being loaded, S: indicates a state of the CLO, S': indicates a new state of the CLO, and Bool: indicates "Accept" if true or "Reject" if false. The ONLOAD event is started whenever a memory access operation to load data is initiated. When the ONLOAD event starts, the CLO inspects the metadata to evaluate the request. The *Addr* provides the specific memory address from which data is to be loaded, while the *CI* points to the cache index, which enhances the CLO to identify the exact location within the cache where the data resides. *CD* corresponds to the data being loaded, and *S* represents the current state of the CLO, encapsulating all required context information about the memory access environment. Based on the evaluation, the CLO computes a new state *S'* and decides whether the memory access operation is permissible. If the access is valid and complies with the policy, the CLO returns an "Accept" (true) value, allowing the data load to proceed. Otherwise, the CLO returns "Reject" (false), preventing access and maintaining memory integrity and ensures that the CLO enforce, instant memory access policies, maintaining security and correctness. As a result, CLO acts on a per-access basis, dynamically responding to each access request based on contextual metadata. By evaluating the memory access operations directly within hardware, the computer system **102** minimizes software overhead, enhances performance, and enforces access control policies at a fine-grained level without reliance on the hypervisor **104** for every individual access, which enhances the computer system **102** efficiency and security, particularly in environments where memory access patterns need to be controlled.

In accordance with an embodiment, an ONSTORE event for the memory access have meta data of the memory access, which are: ONSTORE: (Addr, CI, CD, mod, S) -> S', bool, wherein Addr: indicates an address of data to be loaded, CI: indicates a Cache Index, being a cache-specific identifier that identifies the location in the cache, Mod: indicates whether the data has been modified in the cache, CD: indicates the data being loaded, S: indicates a state of the CLO, S': indicates a new state of the CLO, and Bool: indicates "Accept" if true or "Reject" if false. The ONSTORE event is initiated whenever the memory access operation to store data is initiated. When the ONSTORE event occurs, the CLO evaluates the metadata associated with the access request. The *Addr* represents the address at which data is to be stored, while the *CI* points to the cache index, indicating the specific cache location involved in the memory operation. *Mod* indicates whether the data being stored has been modified in the cache, which is required to determine whether any further verification is required. *CD* holds the data to be stored, and *S* reflects the current state of the CLO, providing the required context for evaluating the operation. Based on the evaluation, the CLO computes a new state S' and determines whether the memory access to be allowed or rejected. If the data store operation complies with the access control policies, the CLO returns "Accept" (true), permitting the operation. Otherwise, the CLO returns "Reject" (false), blocking the access and preserving memory integrity that ensures that the CLO enforce memory access control policies on store operations, providing real-time decisions based on the metadata provided by the event. By enabling the functionality, the computer system **102** ensures that only valid and policy-compliant data store operations are allowed, thus preventing unauthorized or inconsistent memory writes. As a result, the CLO inspect and validate store operations directly at the hardware level, minimizing the requirement for software intervention and enhancing both performance and security, as the CLO manages access rights and maintains the computer system **102** integrity across diverse workloads.

In accordance with an embodiment, the CLO is able to access to the client's private cache using a "peek" operation. The peek operation allows the CLO to inspect the contents of the client private cache without altering or interrupting ongoing memory operations, which is required for enabling the CLO to enforce memory access policies while preserving the integrity of the private cache and without disrupting the client operations. When the memory access request is made, the CLO utilizes the peek operation to check the data stored in the private cache, including cachelines that have not yet been written-back to the shared cache **112** or other system-wide memory structures. Moreover, the peek is required to allow the CLO to inspect the private cache contents without initiating additional memory operations that would impact the computer system performance. Furthermore, the peek operation enables the CLO to autonomously observe the computer system **102** state and form informed decisions based on complete context information. Since the peek operation does not interfere with ongoing cache activities, such as loads or evictions, the peek operation provides a non-intrusive means for the CLO to enforce access control policies, ensure that sensitive data remains protected without slowing down the computer system **102** operations that is required in multi-client environments.

In accordance with an embodiment, the shared cache **112** is a Last Level Cache, LLC. In the computer system **102,** the shared cache **112** accessed by the plurality of clients **106** is configured as the Last Level Cache (LLC), representing the final caching layer before data is fetched from main memory. The LLC acts as the processing core and associates the local caches, forming the LLC as a point for coordinating memory interactions across the computer system **102.** When a client initiates the memory access that requires data beyond the client local cache, the request traverses through the CLO and reaches the LLC, which either satisfies the request from the LLC contents or forwards the memory access request to the main memory. Likewise, cacheline evictions from the local caches destined for shared storage pass through the CLO before reaching the LLC. Positioning the shared cache **112** as the LLC ensures that the CLO monitors and regulates cross-client data exchanges. Since the LLC aggregates memory traffic from the plurality of clients **106,** the CLO enforcement of access policies at this level preserves cache integrity and prevents data leakage between untrusted entities. Thereby strengthens the computer system **102** security boundary while preserving cache coherence. Additionally, utilizing the LLC as the shared cache **112** allows for centralized enforcement of data movement, optimizing both isolation and performance in virtualized environments where memory compartmentalization is required.

In accordance with an embodiment, the client is a device or processing arrangement configured to make memory access requests over the memory bus. Each client in the computer system **102** acts as an autonomous entity, such as a processing core, hardware accelerator, or any specialized processing block that issues the memory access requests over the memory bus. The memory access requests include the cacheline loads, evictions, or other operations that result in data movement across various cache layers or into main memory. The CLO is integrated into the memory access path of each client, positioned such that every request generated by the client is intercepted and evaluated before the memory access request proceeds further into the memory hierarchy. The CLO examines the access metadata, applies the programmed policy logic, and produces a corresponding decision to accept or reject the request. The function of the client as an independent memory-accessing entity enables the CLO to enforce access control policies uniformly across diverse workloads and hardware configurations. The client as the processing arrangement capable of generating memory activity, the computer system **102** achieves flexibility and scalability in heterogeneous computing environments. Thereby, the computer system **102** ensures consistent and policy-compliant memory behaviour across the plurality of clients **106** and provides efficient memory isolation in the systems with multiple concurrent execution domains.

Advantageously, the present disclosure provides observing and verifying only cache-memory system interactions rather than the complete instruction stream, allowing for cost-effective hardware implementation with minimal latency impact compared to existing solutions, and the combination of local state memory with peek functionality to restore expressive verification capabilities, thereby enabling shared memory usage in scenarios that previously required software mediation, significantly reducing RPC latencies and associated computational overhead. Additionally, the computer system **102** is configured to enhance the security, isolation, and efficiency of memory access control by utilizing the CLO. By intercepting cacheline loads and evictions directly at the memory access path, the CLO is configured to enforce fine-grained memory access policies independently of the software layer, ensuring that unauthorized or malformed memory operations are detected and prevented immediately. Furthermore, the CLO evaluates memory access events using programmable logic and metadata-driven processing, allowing context-specific policies to be dynamically applied based on the hypervisor **104** configuration, even in complex multi-tenant environments with frequent context switches. The utilization of internal state memory, updated for each memory event, enables the CLO to track access histories and enforce invariants over time, maintaining the integrity and correctness of the shared memory structures. By providing peek access to the private caches and operating transparently across heterogeneous clients, the computer system **102** is configured to adapt to dynamic workload and security requirements while minimizing the computer system **102** latency and computational overhead.

FIG. 2 is a diagram that depicts the one or more CLOs in the computer system, in accordance with an embodiment of the present disclosure. FIG. 2 is described in conjunction with elements the elements of the FIG. 1. With reference to FIG. 2, there is shown a diagram **200** of the one or more CLOs in the computer system **102.**

The diagram **200** represents the operation **202** that allows the one or more CLOs **110** to verify all the memory operations in the computer system **102.** The computer system **102** includes the processing cores (i.e., the first processing core **204A,** the second processing core **204B,** the third processing core **204C,** and the fourth processing core **204D**) that are configured to initiate memory transactions for execution of program instructions. Moreover, each processing core is connected to the private L1 caches (i.e., the first private L1 cache **108A,** the second private L1 cache **108B,** the third private L1 cache **108C,** and the fourth private L1 cache **108D**). Furthermore, the CLOs (i.e., the first CLO **110A,** the second CLO **110B,** the third CLO **110C,** and the fourth CLO **110D**) are positioned between the private L1 caches and the shared cache **112** which acts as the intermediary monitoring units. Each CLO is connected to the corresponding private L1 cache above the CLO and the shared cache **112** below, enabling the CLO to intercept and monitor all cacheline operations flowing between the private and the shared cache **112.** Additionally, the configuration of the one or more CLOs **110** ensures that only the authorized memory access is permitted to access the memory. As a result, the configuration of the computer system **102** enables, hardware-based memory access control with minimal latency overhead, protecting shared memory access while maintaining performance in multi-core systems where the untrusted actors are required to share memory resources securely.

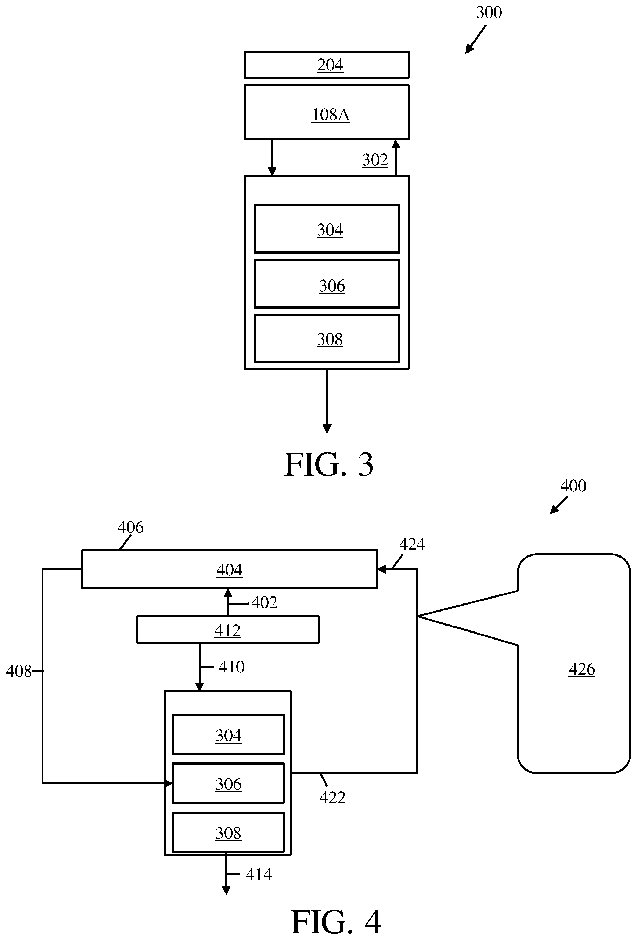

FIG. 3 is a diagram that depicts an internal structure of the one or more CLOs, in accordance with an embodiment of the present disclosure. FIG. 3 is described in conjunction with the elements of the FIGs. 1 and 2. With reference to FIG. 3, there is shown a diagram **300** that depicts the internal structure of the one or more CLOs.

In an implementation scenario, the diagram **300** depicts the processing core **204,** which acts as the primary entity integrating the one or more CLO **110** functional elements. The internal structure of the one or more CLOs **110** is connected to the first private L1 cache **108A,** which represents the data path for memory operations and connects to the peek **302.** The peek **302** allows the CLO to examine cache contents without disrupting ongoing operations. Furthermore, the vertically arranged within the CLO are the core internal components, including a SRAM **304,** which stores state information, the program **306,** which contains instructions that define the verification rules and the processing element **308,** which is required for executing rules. Furthermore, the core internal components are interconnected through internal pathways that facilitate data flow required for verifying memory operations instantly. Additionally, the core internal components enable the CLO to perform efficient, hardware-based verification of memory operations at the cacheline granularity. As a result, the CLO provides memory safety with minimal latency overhead, ensuring that validated operations proceed without performance degradation.

FIG. 4 is a diagram that depicts an interaction of the trusted entity and the CLO, in accordance with an embodiment of the present disclosure. FIG. 4 is described in conjunction with the elements of the FIGs. 1, 2 and 3. With reference to FIG. 4, there is shown a diagram **400** that depicts an interaction of the trusted entity and the one or more CLOs.

In an implementation scenario, the TE **404,** and the CLO within the computer system **102** is connected to the untrusted actor **412** through operation **402.** When the untrusted actor **412** initiates a request for shared memory access through operation **410,** the TE **404** detects the request to protected memory areas through operation **406** and installs the CLO program through the operation **408.** Furthermore, the CLO includes components arranged vertically, such as the SRAM **304** for storing state information, the program **306** containing verification logic, and the processing Element **308** that executes program instructions. Once installed, the CLO monitors all memory accesses initiated by the untrusted actor **412** through the operation **422,** allowing memory accesses through path **414** while reporting violations to the TE **404** through the operation **424.** Upon detecting violations, the TE **404** initiates corrective action as indicated by the operation **426,** which includes re-verification, repair of data structures, or termination of the offending process. The operation **426** on the right side indicates the process is overly restrictive, generating potential false positives that are then verified through a slower but more comprehensive verification process by the operating system. As a result, the computer system 102 enables efficient hardware-based verification of memory operations at cacheline while providing the TE **404** with the capability to implement remediation strategies, thus ensuring memory safety with minimal performance impact for the shared memory access between the untrusted actor **412.**

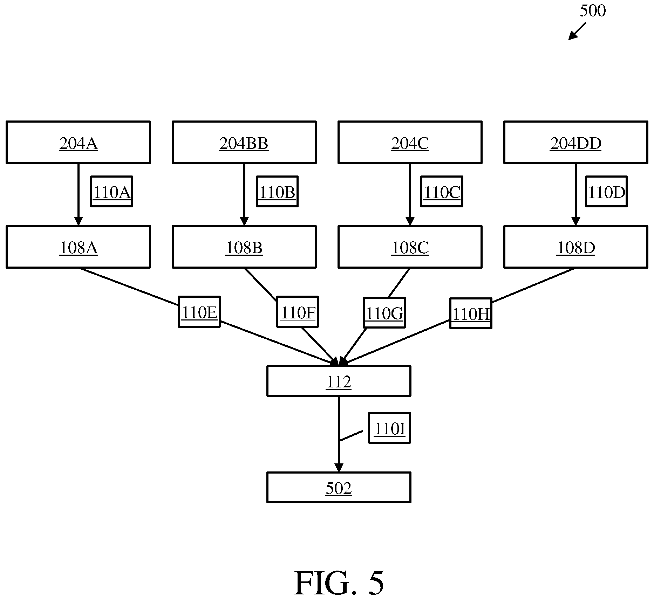

FIG. 5 is a diagram that depicts an exemplary scenario of the computer system with the CLO that is configured to control memory accesses, in accordance with an embodiment of the present disclosure. FIG. 5 is described in conjunction with the elements of the FIGs. 1, 2, 3 and 4. With reference to FIG. 5, there is shown a diagram **500** that the computer system **102** is configured to control the memory access.

In an exemplary scenario, the computer system **102** includes the processing core that are configured to execute program instructions and initiate memory access operations. Moreover, each of the processing cores (i.e., the first processing core **204A,** the second processing core **204B,** the third processing core **204C** and the fourth processing core **204D)** are connected to the private L1 cache (i.e., the first private L1 cache **108A,** the second private L1 cache **108B,** the third private L1 cache **108C,** and the fourth private L1 cache **108D)** through the CLO (i.e., the first CLO **110A,** the second CLO **110B,** the third CLO **110C,** the fourth CLO **110D** ) The one or more CLOs **110** are positioned at different locations. In an example, the CLO is positioned between each core and the private L1 cache. In another example, the CLO is positioned between each private L1 cache and the shared Cache **112,** represented through (i.e., the fifth CLO **110E,** the sixth CLO **110F,** the seventh CLO **110G,** the eighth CLO **110H)** the shared cache **112** is connected to the computer system **102** DRAM **502** through the pathway with the CLO **1101** positioned between the shared cache **112** and the DRAM **502,** although the ninth CLO **1101** location indicating the ninth CLO **1101** is less optimal. The arrangement of the one or more CLO **110** at multiple points in the memory hierarchy allows for the monitoring of all cacheline operations throughout the computer system **102.** By positioning the one or more CLOs **110** between the processing cores and the private L1 caches, the computer system **102** verifies memory operations at the source before the CLO enters the private L1 cache hierarchy. Similarly, the one or more CLOs **110** positioned between the private caches and the shared LLC **112** enable verification of cacheline evictions and loads at the boundary between the private and shared resources. As a result, the computer system 102 provides flexible deployment options for memory verification, allowing the computer system **102** protection at the most required points in the memory hierarchy based on performance requirements and security considerations while enabling the shared memory access between the untrusted actors.

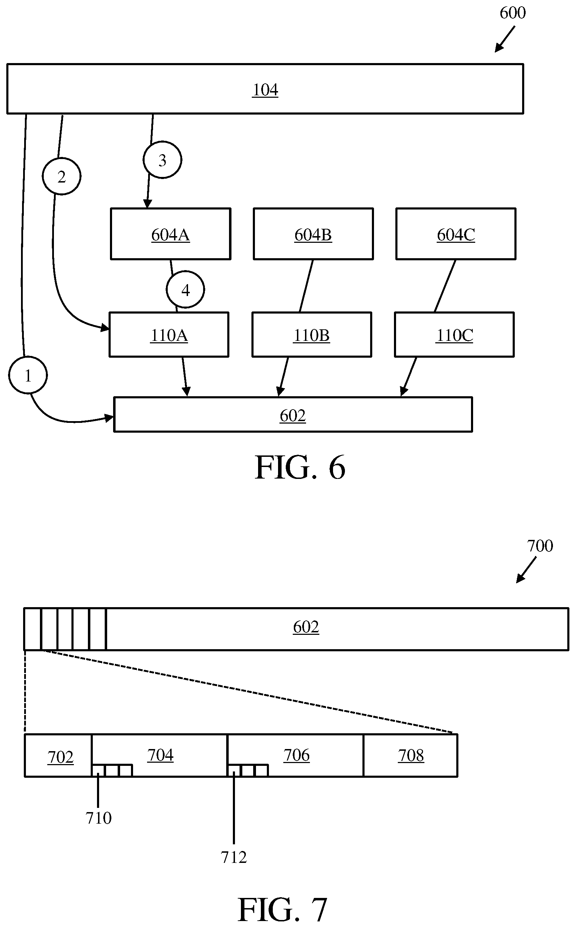

FIG. 6 is a diagram that depicts an implementation scenario of the setting up an object cache memory utilizing the CLO, in accordance with an embodiment of the present disclosure. FIG. 6 is described in conjunction with the elements of the FIGs. 1, 2, 3, 4 and 5. With reference to FIG. 6, there is shown a diagram **600** that depicts an implementation scenario of the setting up an object cache memory utilizing the CLO.

In an implementation scenario, the hypervisor **104** is configured to operate as the TE at the top of the hierarchy, with the virtual Machines (i.e., the first virtual machine **604A,** the second virtual machine **604B,** the third virtual machine **604C**,) acts as the untrusted actors. Moreover, the diagram **600** represents the hypervisor **104** operating as the TE initializing and reserving a portion of the computer system **102** memory for the object cache memory **602,** which is shared across the virtual machines. Furthermore, the hypervisor **104** programs the CLO (i.e., the first CLO **110A,** the second CLO **110B,** the third CLO **110C**) with the virtual machines' specific rules. The hypervisor **104** informs the virtual machines about the available shared memory region, potentially through a virtual PCI device. The first virtual machine **604A** begins directly issuing memory requests to the first CLO **110A,** which monitors and validates the accesses according to the programmed rules before allowing the memory requests to reach the object cache memory **602.** The configuration enables, concurrent access to the shared memory resources without requiring the hypervisor **104** direct involvement in every memory operation. Each virtual machines memory accesses are independently monitored by the assigned CLO, which enforces access permissions and maintains data structure integrity within the shared memory region. The one or more CLO **110** verifies that virtual machines adhere to locking and only access memory areas the virtual machines are authorized to utilize, preventing potential corruption or unauthorized access attempts. As a result, the computer system **102** allows for efficient resource sharing in virtualized environments while maintaining isolation between the untrusting virtual machines, significantly reducing the overhead associated with software-mediated shared memory access and enabling efficient utilization of data centre resources.

FIG. 7 is a diagram that depicts a memory layout of the object cache memory region, in accordance with an embodiment of the present disclosure. FIG. 7 is described in conjunction with the elements of the FIGs. 1, 2, 3, 4, 5 and 6. With reference to FIG. 7, there is shown a diagram **700** that depicts the memory layout of the object cache memory region.

In an implementation scenario, the object cache memory **602** are structured to enable access control enforced by the one or more CLOs **110** hardware. The Object Cache Memory **602** is organized into multiple different sections, with each object cache memory containing different fields, such as an object hash **702** for unique identification, a write permissions **704** implemented as bit flags indicating which virtual machines have write access to the object cache memory **602,** a read permissions **706** similarly indicating read access rights for different virtual machines, and a data block **708** containing the actual object cache memory **602** data. Furthermore, a first permission bit **710** represents a bit that controls write permission for the virtual machine 0, and a second permission bit **712** represents a bit that controls read permission for virtual machine 0. As a result, the memory organization enables the one or more CLOs **110** to efficiently verify access permissions, ensuring that each virtual machine only performs authorized operations on the shared memory resources while maintaining isolation between untrusting entities, without requiring software mediation for each memory access.

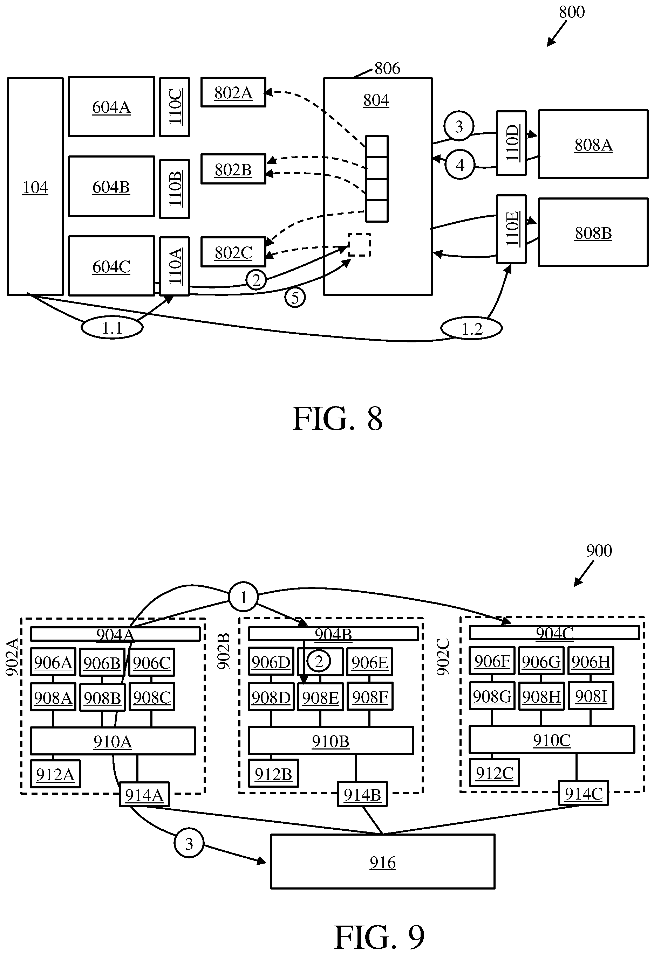

FIG. 8 is a diagram that depicts an implementation scenario of accelerator pooling utilizing the CLOs for secure memory access management, in accordance with an embodiment of the present disclosure. FIG. 8 is described in conjunction with the elements of the FIGs. 1, 2, 3, 4, 5, 6 and 7. With reference to FIG. 8, there is shown a diagram **800** that depicts the accelerator pooling utilizing the CLOs for secure memory access management.

In an implementation scenario, the hypervisor **104** in the computer system **102** manages multiple virtual machines (i.e., the first virtual machine **604A,** the second virtual machine **604B,** and the third virtual machine 604C), each with the CLO (i.e., the first CLO **110A,** the second CLO **110B,** and the third CLO **110C**) and a private memory areas (i.e., a first private memory area **802A,** a second private memory area **802B,** a third private memory area **802C**). Furthermore, the diagram **800** represents that at the centre of the computer system **102** is a shared memory **806** containing a shared work queue **804** that enables work distribution to an accelerators (i.e., a first accelerator **808A,** and a second accelerator **808B)**, which are hardware units equipped with the CLO (i.e., the fourth CLO **110D** and the fifth CLO **110E)**. The diagram **800** represents that the hypervisor **104** programming the one or more CLOs **110** with configurations for both the virtual machines and the accelerators. Furthermore, the third virtual machine **604C** adds work items to the shared work queue **804** by accessing the virtual machine through the third CLO **110C,** which ensures access control and data structure integrity. Moreover, the diagram **800** represents the first accelerator **808A** removing work items from the shared work queue **804** through the fourth CLO **110D,** which verifies access patterns and shows the completion notification being returned to the work queue **804** and depicts the third virtual machine **604C** checking for work completion, with all operations verified by the respective CLOs. The accelerator pool configuration enables efficient sharing of hardware resources across the multiple untrusting virtual machines without requiring direct the hypervisor **104** for each operation. The CLOs enforce access controls and verify that each entity, both the virtual machines and the accelerators, adhere to protocols when manipulating the shared work queue **804.** The virtual machine only inserted work items to authorized locations, and the accelerators only removed and processed items according to the programmed verification rules. As a result, the computer system 102 enables efficient hardware resource pooling in virtualized environments with isolation, significantly reducing the latency associated with the accelerator operations while maintaining the security of the virtual machine isolation, ultimately enhancing data centre resource utilization and performance for acceleration-dependent workloads.

FIG. 9 is a diagram that depicts an implementation scenario that illustrates rack-scale memory sharing by utilizing the CLO to control access to a shared memory pool across multiple servers, in accordance with an embodiment of the present disclosure. FIG. 9 is described in conjunction with the elements of the FIGs. 1, 2, 3, 4, 5, 6, 7 and 8. With reference to FIG. 9, there is shown a diagram **900** that illustrates the rack-scale memory sharing by utilizing the one or more CLOs **110** to control access to the shared memory pool across multiple servers.

In an implementation scenario, the one or more CLOs **110** in the computer system **102** across multiple servers access a common memory pool. Moreover, each server (i.e., the first Server **902A,** the second Server **902B,** and the third server **902C**) having the hypervisor (i.e., the first hypervisor **904A,** the second hypervisor **904B,** the third hypervisor **904C**)**.** In an example, the first server **902A** contains the first hypervisor **904A.** In another example, the second server **902B** contains the second hypervisor **904B.** In another example, the third server **902C** contains the third hypervisor **904C.** Furthermore, each server managing the virtual machines (i.e., the first virtual machine **906A,** the second virtual machine **906B,** the third virtual machine **906C,** the fourth virtual machine **906D,** the fifth virtual machine **906E,** the sixth virtual machine **906F,** the seventh virtual machine **906G,** the eighth virtual machine **906H**). Additionally, each virtual machine is equipped with the CLO (i.e., the first CLO **908A,** the second CLO **908B,** the third CLO **908C,** the fourth CLO **908D,** the fifth CLO **908E,** the sixth CLO **908F,** the seventh CLO **908G,** the eighth CLO **908H,** the ninth CLO **908I)** all the CLOs are connected to the memory buses (i.e., the first memory bus **910A,** the second memory bus **910B,** and the third memory bus **910C).** Each server includes the DRAM (i.e., the first DRAM **912A,** the second DRAM **912B,** and the third DRAM **912C**) and the load/store fabric interface (i.e., the first load/store fabric interfaces **914A,** the second load/store fabric interfaces **914B,** the third load/store fabric interfaces **914C**) that connect all the servers to the shared Memory Pool **916.** Furthermore, the computer system **102** includes a server reboot that is started from server 1 902A then the second hypervisor **904B** on Server 2 **902B** starts recovery to restore state consistency, and all the server's access to the shared memory pool **916.** The recovery process involves the hypervisor **104** of the operational servers cooperating with the rebooting server 1 **902A** to restore the CLO state information, which includes flushing local CPU caches, running integrity checks on shared data structures, or suspending the virtual machines accessing the affected memory regions. The one or more CLO **110** by enforcing access controls and verifying memory operations across server boundaries, ensure that even after the computer system **102** failure, memory consistency and isolation between the untrusting virtual machines are maintained. As a result, the computer system **102** enables efficient resource sharing at rack scale with recovery, allowing data centres to deploy far-memory systems with pooled memory resources while maintaining strong security and consistency guarantees even in the presence of partial system failures.

Modifications to embodiments of the present disclosure described in the foregoing are possible without departing from the scope of the present disclosure as defined by the accompanying claims. Expressions such as "including," "comprising," "incorporating," "have," "is" used to describe, and claim the present disclosure are intended to be construed in a non-exclusive manner, namely allowing for items, components or elements not explicitly described also to be present. Reference to the singular is also to be construed to relate to the plural. The word "exemplary" is used herein to mean "serving as an example, instance, or illustration." Any embodiment described as "exemplary" is not necessarily to be construed as preferred or advantageous over other embodiments or to exclude the incorporation of features from other embodiments. The word "optionally" is used herein to mean "is provided in some embodiments and not provided in other embodiments." It is appreciated that certain features of the present disclosure, which are, for clarity, described in the context of separate embodiments, may also be provided in combination in a single embodiment. Conversely, various features of the invention, which are, for brevity, described in the context of a single embodiment, may also be provided separately or in any suitable combination or as suitable in any other described embodiment of the disclosure.

## Claims

1. A computer system (102) comprising a hypervisor (104) and a plurality of clients (106) on a memory bus, each client having a local cache and wherein the plurality of clients (106) shares a shared cache (112), wherein the computer system (102) is **characterized in that** the computer system (102) further comprises
one or more cacheline observers, CLO (110), the CLO being a programmable hardware unit, each connected to a client, and wherein the CLO is configured to
check memory access made by the client and
produce an "accept" or "reject" of the memory access, wherein
when the CLO produces a "reject", the CLO is further configured to prevent the memory access and notify the hypervisor.

2. The computer system (102) according to claim 1, wherein the CLO is further configured to notify the server by generating an interrupt.

3. The computer system (102) according to any preceding claim, wherein the CLO is further configured to update a state on each memory access.

4. The computer system (102) according to any preceding claim, wherein a memory access is a cacheline eviction or a cacheline load.

5. The computer system (102) according to any preceding claim, wherein the CLO is a hardware unit that comprises a processing arrangement, a state memory and a program, wherein the program comprises computer-readable instructions that when loaded into the processing arrangement causes the CLO to perform the actions of the CLO's program.

6. The computer system (102) according to claim 5, wherein the CLO is configured to receive the program from the hypervisor (104).

7. The computer system (102) according to claim 6, wherein when an execution context of the computing system switches, the CLO is configured to receive a new program.

8. The computer system (102) according to claim 7, wherein when an execution context of the computing system switches, the hypervisor (104) is configured to save and restore the CLO state.

9. The computer system (102) according to any preceding claim, wherein the CLOs being connected between a processing core and the local cache of its client.

10. The computer system (102) according to any preceding claim, wherein the CLOs being connected between the local cache of its client and the shared cache (112).

11. The computer system (102) according to any preceding claim, wherein an ONLOAD event for the memory access have meta data of the memory access, which are:
ONLOAD: (Addr, CI, CD,S) -> S', bool, wherein
Addr: indicates an address of data to be loaded,
CI: indicates a Cache Index, being a cache-specific identifier that identifies the location in the cache,
CD: indicates the data being loaded,
S: indicates a state of the CLO,
S': indicates a new state of the CLO, and
Bool: indicates "Accept" if true or "Reject" if false

12. The computer system (102) according to any preceding claim, wherein an ONSTORE event for the memory access have meta data of the memory access, which are:
ONSTORE : (Addr, CI, CD, mod, S) -> S', bool, wherein
Addr: indicates an address of data to be loaded,
CI: indicates a Cache Index, being a cache-specific identifier that identifies the location in the cache,
Mod: indicates whether the data has been modified in the cache,
CD: indicates the data being loaded,
S: indicates a state of the CLO,
S': indicates a new state of the CLO, and
Bool: indicates "Accept" if true or "Reject" if false.

13. The computer system (102) according to any preceding claim, wherein the CLO is able to access to the client's private cache using a "peek" operation.

14. The computer system (102) according to any preceding claim, wherein the shared cache (112) is a Last Level Cache, LLC.

15. The computer system (102) according to any preceding claim, wherein a client is a device or processing arrangement configured to make memory access requests over the memory bus.

## Amended claims

### Amended claims in accordance with Rule 137(2) EPC.

1. A computer system (102) comprising a hypervisor (104) and a plurality of clients (106) on a memory bus, each client having a local cache and wherein the plurality of clients (106) shares a shared cache (112), wherein the computer system (102) is **characterized in that** the computer system (102) further comprises
one or more cacheline observers, CLO (110), the CLO being a programmable hardware unit, each connected to a client, and wherein the CLO is configured to
check memory access made by the client and
produce an "accept" or "reject" of the memory access, wherein
when the CLO produces a "reject", the CLO is further configured to prevent the memory access and notify the hypervisor.

2. The computer system (102) according to claim 1, wherein the CLO is further configured to notify the server by generating an interrupt.

3. The computer system (102) according to any preceding claim, wherein the CLO is further configured to update a state on each memory access.

4. The computer system (102) according to any preceding claim, wherein a memory access is a cacheline eviction or a cacheline load.

5. The computer system (102) according to any preceding claim, wherein the CLO is a hardware unit that comprises a processing arrangement, a state memory and a program, wherein the program comprises computer-readable instructions that when loaded into the processing arrangement causes the CLO to perform the actions of the CLO's program.

6. The computer system (102) according to claim 5, wherein the CLO is configured to receive the program from the hypervisor (104).

7. The computer system (102) according to claim 6, wherein when an execution context of the computing system switches, the CLO is configured to receive a new program.

8. The computer system (102) according to claim 7, wherein when an execution context of the computing system switches, the hypervisor (104) is configured to save and restore the CLO state.

9. The computer system (102) according to any preceding claim, wherein the CLOs being connected between a processing core and the local cache of its client.

10. The computer system (102) according to any preceding claim, wherein the CLOs being connected between the local cache of its client and the shared cache (112).

11. The computer system (102) according to any preceding claim, wherein the CLO is configured to process an ONLOAD event for the memory access, the ONLOAD event having meta data of the memory access, which are:
ONLOAD: (Addr, CI, CD,S) -> S', bool, wherein
Addr: indicates an address of data to be loaded,
CI: indicates a Cache Index, being a cache-specific identifier that identifies the location in the cache,
CD: indicates the data being loaded,
S: indicates a state of the CLO,
S': indicates a new state of the CLO, and
Bool: indicates "Accept" if true or "Reject" if false.

12. The computer system (102) according to any preceding claim, wherein the CLO is configured to process an ONSTORE event for the memory access, the ONSTORE event having meta data of the memory access, which are:
ONSTORE : (Addr, CI, CD, mod, S) -> S', bool, wherein
Addr: indicates an address of data to be loaded,
CI: indicates a Cache Index, being a cache-specific identifier that identifies the location in the cache,
Mod: indicates whether the data has been modified in the cache,
CD: indicates the data being loaded,
S: indicates a state of the CLO,
S': indicates a new state of the CLO, and
Bool: indicates "Accept" if true or "Reject" if false.

13. The computer system (102) according to any preceding claim, wherein the CLO is able to access to the client's private cache using a "peek" operation.

14. The computer system (102) according to any preceding claim, wherein the shared cache (112) is a Last Level Cache, LLC.

15. The computer system (102) according to any preceding claim, wherein a client is a device or processing arrangement configured to make memory access requests over the memory bus.
